# EUROPÄISCHE PATENTANMELDUNG

(11) **EP 2 486 832 A1**
(43) Veröffentlichungstag der Anmeldung: **15.08.2012**
(21) Anmeldenummer: 11007791.4
(22) Anmeldetag: 23.09.2011
(51) Int. Cl.: A47J 37/06, A47J 37/10

(54) **Grillpfanne oder Grillplatte**

(30) Priorität: 09.02.2011 DE 102011010812
(71) Anmelder: Compagnie de la Fecht et du Gout SAS (CFG), 68000 Collmar (FR)
(72) Erfinder: Droese, Joachim, 40764 Langenfeld (DE)
(74) Vertreter: Cohausz Hannig Borkowski Wißgott

(57) **Zusammenfassung**

Die Erfindung betrifft eine Grillpfanne oder Grillplatte (1) mit einem Innenboden (2) und einem den Innenboden umgebenden vorstehenden Rand (5), wobei der Innenboden auf seiner Oberseite nach oben vorstehende Rippen (3) aufweist, auf denen das Grillgut zur Auflage gelangt und deren Rippenenden (3a) zum Rand einen Abstand bilden, wobei in den Zwischenräumen (4) zwischen den Rippen der Innenboden von der Bodenmitte zu den äußeren Rippenenden und zum Rand hin abfällt und dass die Oberseiten der Rippen in derselben waagerechten ungekrümmten Ebene (7) auf gleicher Höhe liegen.

## Beschreibung

Die Erfindung betrifft eine Grillpfanne oder Grillplatte mit einem Innenboden und einem den Innenboden umgebenden vorstehenden Rand, wobei der Innenboden auf seiner Oberseite nach oben vorstehende Rippen aufweist, auf denen das Grillgut zur Auflage gelangt und deren Rippenenden zum Rand einen Abstand bilden.

Es sind Grillpfannen oder Grillplatten bekannt, auf deren flachem Innenboden nach oben vorstehende Rippen angeformt sind, auf denen das Grillgut insbesondere ein Steak gelegt wird. Unterhalb des Grillgutes sammelt sich zwischen den Rippen das Fett und verhindert, dass das Fett aus dem Grillgut leicht austritt.

Aufgabe der Erfindung ist es, die Grillqualität von Grillpfannen und Grillplatten zu verbessern.

Diese Aufgabe wird erfindungsgemäß dadurch gelöst, dass in den Zwischenräumen zwischen den Rippen der Innenboden von der Bodenmitte zu den äußeren Rippenenden und zum Rand hin abfällt und dass die Oberseiten der Rippen in derselben waagerechten ungekrümmten Ebene auf gleicher Höhe liegen.

Das vom Grillgut abgegebene Fett wird vom Grillgut weg zum Rand der Grillpfanne oder der Grillplatte geführt, so dass es in hohem Maße aus dem Grillgut austreten kann.

Bei einer vorteilhaften Ausführung sind einige oder alle Rippen jeweils von einer insbesondere geraden Reihe nach oben vorstehender Noppen gebildet, so dass das Fett noch besser abfließen kann.

Vorzugsweise wird vorgeschlagen, dass der Höhenunterschied des Innenbodens in den Zwischenräumen von der Bodenmitte zu den äußeren Rippenenden > 3 mm beträgt. Ferner sollten die Rippen eine Breite von 0,3 bis 5 cm vorzugsweise von 1 bis 3 cm aufweisen. Auch sollten die Zwischenräume zwischen den Rippen eine Breite von 0,3 bis 5 cm aufweisen.

Von Vorteil ist, wenn die Breite der Rippen größer ist als die Breite der Zwischenräume. Ferner ist die Breite der Zwischenräume größer als die Breite der Rippen. In einer weiteren Ausführung weisen die Rippen und Zwischenräume die gleiche Breite auf. Auch können die Rippen nebeneinander parallel und fischgrätenartig V-förmig angeordnet sein.

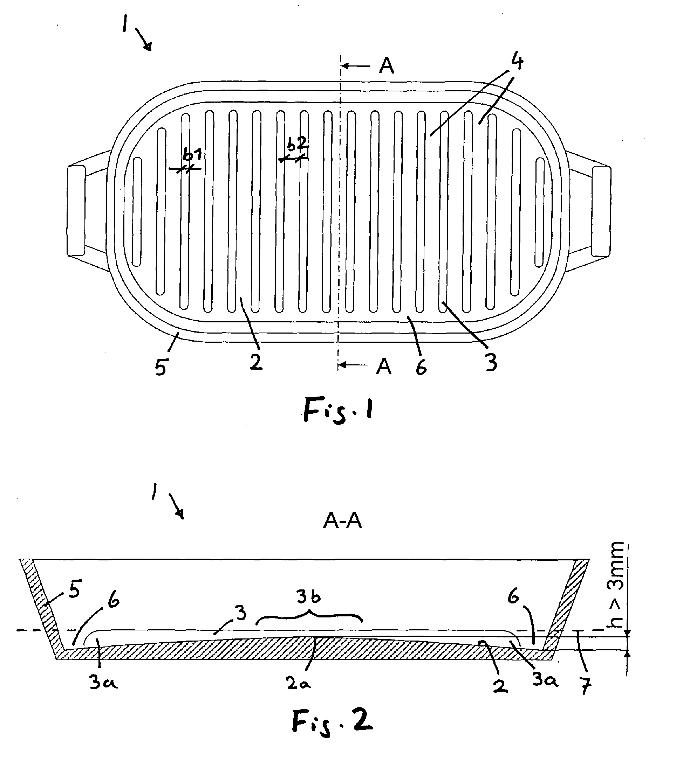

Zwei Ausführungsbeispiele der Erfindung sind in den Zeichnungen dargestellt und werden im Folgenden näher beschrieben. Es zeigen
- Fig. 1: eine Ansicht von oben auf ein erstes Ausführungsbeispiel mit zueinander parallelen Rippen geringerer Breite als die der Zwischenräume,
- Fig. 2: einen senkrechten Schnitt durch das erste Ausführungsbeispiel nach A-A in Fig. 1,

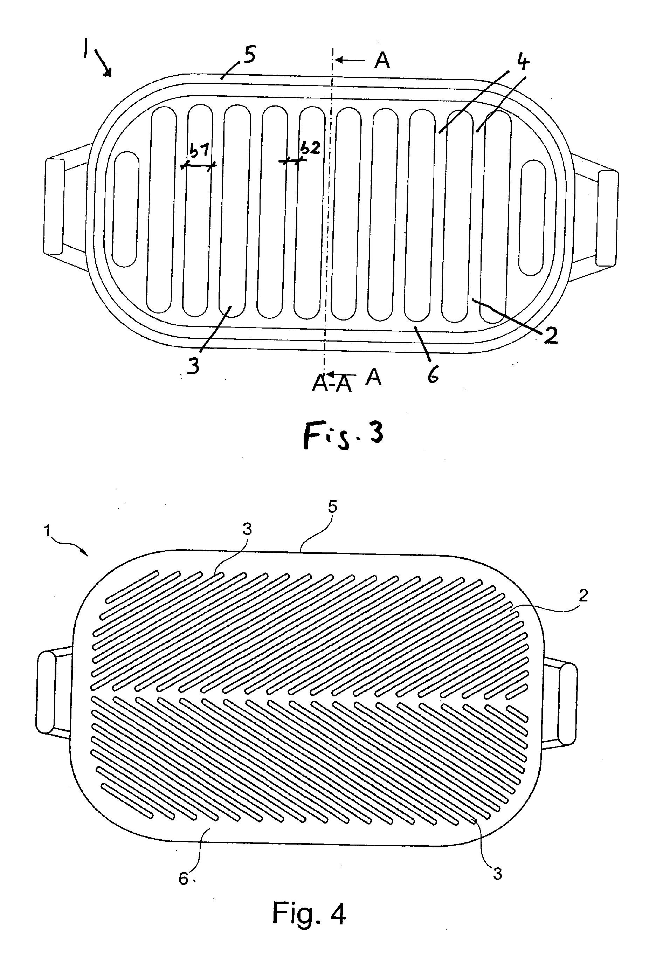

- Fig. 3: ein zweites Ausführungsbeispiel mit Rippen größerer Breite als die der Zwischenräume,
- Fig. 4: eine Ansicht von oben auf ein drittes Ausführungsbeispiel mit fischgrätenartig angeordneten parallelen Rippen.

Eine metallene Grillpfanne oder Grillplatte 1 besitzt einen Innenboden 2, auf dessen Oberseite nach oben vorstehende Rippen 3 angeformt sind, die parallel zueinander liegen, eine gleichbleibende Breite b1 von 1 bis 3 cm aufweisen und zwischen sich längliche insbesondere nutenförmige Zwischenräume 4 bilden, mit einer gleichbleibenden Zwischenraumbreite b2 von 0,3 bis 5 cm vorzugsweise 1 bis 3 cm.

Der längliche Innenboden 2 ist ringsum von einem, nach oben vorstehenden Rand 5 umgeben, wobei zwischen den äußeren Enden 3a der Rippen 3 und dem Rand 5 ein ringsum verlaufender Abstand 6 am Fuße des Randes 5 besteht, der als Fettsammelrinne 6 dient.

Der Innenboden 2 ist nicht flach bzw. eben ausgeführt, sondern ist nach oben in der Weise konvex gewölbt, dass die Bodenmitte 2a zwischen den Rippen im Rippenmittelbereich 3b höher liegt als an den äußeren Rippenenden 3a, so dass die Zwischenräume 4 im Rippenmittelbereich 3b höher liegen als an den beiden äußeren Zwischenraumenden. Dies führt dazu, dass das aus dem Grillgut austretende Fett durch die Zwischenräume 4 nach außen in den Abstand 6 bzw. in die äußere Fettsammelrinne 6 fließt.

Im Gegensatz zum Innenboden 2 sind die Oberseiten der Rippen 3, auf denen das Grillgut liegt, nicht gekrümmt, sondern liegen in einer waagerechten ungekrümmten Ebene 7, die höher liegt als der Innenboden 2.

In nicht dargestellten Ausführungen bestehen einige oder alle Rippen jeweils aus einer insbesondere geraden Reihe von Noppen, so dass die Rippe in einzelne Noppen aufgeteilt ist. Unter Noppen werden auch vorstehende Stifte und kleine Kegelstümpfe verstanden.

Vorteile:
- Das vom Grillgut abgegebene Fett wird vom Grillgut sicher weggeführt.
- Das flüssige Fett sammelt sich am Rand des Innenbodens.
- Eine fettarme Zubereitung.

## Patentansprüche

1. Grillpfanne oder Grillplatte (1) mit einem Innenboden (2) und einem den Innenboden umgebenden vorstehenden Rand (5), wobei der Innenboden auf seiner Oberseite nach oben vorstehende Rippen (3) aufweist, auf denen das Grillgut zur Auflage gelangt und deren Rippenenden (3a) zum Rand einen Abstand bilden, **dadurch gekenzeichnet**, dass in den Zwischenräumen (4) zwischen den Rippen (3) der Innenboden (2) von der Bodenmitte zu den äußeren Rippenenden (3) und zum Rand (5) hin abfällt und dass die Oberseiten der Rippen (3) in derselben waagerechten ungekrümmten Ebene (7) auf gleicher Höhe liegen.

2. Grillpfanne oder Grillplatte nach Anspruch 1, **dadurch gekennzeichnet, dass** einige oder alle Rippen jeweils von einer insbesondere geraden Reihe nach oben vorstehender Noppen gebildet sind.

3. Grillpfanne oder Grillplatte nach Anspruch 1 oder 2, **dadurch gekenzeichnet**, dass der Höhenunterschied (h) des Innenbodens (2) in den Zwischenräumen (4) von der Bodenmitte zu den äußeren Rippenenden (3a) > 3 mm beträgt.

4. Grillpfanne oder Grillplatte nach einem der vorherigen Ansprüche, **dadurch gekenzeichnet**, dass die Rippen (3) eine Breite (b1) von 0,3 bis 5 cm aufweisen.

5. Grillpfanne oder Grillplatte nach einem der Ansprüche 1 bis 3, **dadurch gekenzeichnet**, dass die Rippen (3) eine Breite (b1) von 1,0 bis 3 cm aufweisen.

6. Grillpfanne oder Grillplatte nach einem der vorherigen Ansprüche, **dadurch gekenzeichnet**, dass die Zwischenräume (4) zwischen den Rippen (3) eine Breite (b2) von 0,3 bis 5 cm aufweisen.

7. Grillpfanne oder Grillplatte nach einem der vorherigen Ansprüche, **dadurch gekenzeichnet**, dass die Breite (b1) der Rippen (3) größer ist als die Breite (b2) der Zwischenräume (4).

8. Grillpfanne oder Grillplatte nach einem der Ansprüche 1 bis 6, **dadurch gekenzeichnet**, dass die Breite (b2) der Zwischenräume (4) größer ist als die Breite (b1) der Rippen (3).

9. Grillpfanne oder Grillplatte nach einem der Ansprüche 1 bis 6, **dadurch gekenzeichnet**, dass die Rippen (3) und Zwischenräume (4) die gleiche Breite (b1, b2) aufweisen.

10. Grillpfanne oder Grillplatte nach einem der vorherigen Ansprüche, **dadurch gekenzeichnet**, dass die Rippen (3) nebeneinander parallel und fischgrätenartig V-förmig angeordnet sind.
